# EUROPÄISCHE PATENTANMELDUNG

(11) **EP 0 886 401 A2**
(43) Veröffentlichungstag der Anmeldung: **23.12.1998**
(21) Anmeldenummer: 98110067.0
(22) Anmeldetag: 03.06.1998
(51) Int. Cl.: H04L 12/403, B60R 16/02

(54) **Sende-und Empfangsvorrichtung, insbesondere für periphere Module eines Steuersystems mit einer die Module steuernden Zentraleinheit**

(30) Priorität: 19.06.1997 DE 19725917
(71) Anmelder: TEMIC TELEFUNKEN microelectronic GmbH, 74072 Heilbronn (DE)
(72) Erfinder: Fendt, Günter, 86529 Schrobenhausen (DE)
(74) Vertreter: Maute, Hans-Jürgen, Dipl.-Ing.

(57) **Zusammenfassung**

Die Erfindung betrifft eine Sende- und Empfangsvorrichtung, insbesondere für periphere Module (11) eines Steuersystems mit einer die Module (11) steuernden Zentraleinheit, mit einem ersten Eingangskreis (30), der mit einem ersten Eingangs/Ausgangs-Anschluß (17) verbunden ist und der einen Datenausgang (31) aufweist, der über eine erste Sendetorschaltung (32) mit einem Eingang (34) eines ersten mit einem zweiten Eingangs/Ausgangs-Anschluß (18) verbunden Ausgangskreises (35) verbunden ist, und einem zweiten mit dem zweiten Eingangs/Ausgangs-Anschluß (18) verbundenen Eingangskreis (40), der einen Datenausgang (41) aufweist, der über eine zweite Sendetorschaltung (42) mit einem Eingang (44) eines zweiten mit dem ersten Eingangs/Ausgangs-Anschluß (17) verbundenen Ausgangskreises (45) verbunden ist. Um bei einem bidirektionalen Datenübertragungsbetrieb die Datenübertragungsrichtung automatisch erkennen zu können ist erfindungsgemäß eine Sendetor-Steuerschaltung (50) vorgesehen, die mit den Datenausgängen (31, 41) des ersten und des zweiten Eingangskreises (30, 40) verbunden ist und die entsprechend der jeweiligen Datenübertragungsrichtung die erste bzw. zweite Sendetorschaltung (32, 42) sowie den ersten bzw. zweiten Ausgangskreis (35, 45) freigibt und den zweiten bzw. ersten Ausgangskreis (45, 35) sperrt.

## Beschreibung

Die Erfindung betrifft eine Sende- und Empfangsvorrichtung, insbesondere für periphere Module eines Steuersystems mit einer die Module steuernden Zentraleinheit.

Bei dezentralen Steuersystemen, bei denen eine Zentraleinheit eine Vielzahl von peripheren Modulen über eine Eindraht-Busleitung ansteuert, wie dies beispielsweise aus "Motorola Semiconductor Application Note AN 475, 1993", bekannt ist, muß die gesamte Treiberleistung für die Übertragung von Information zu den einzelnen peripheren Modulen von der Zentraleinheit bereitgestellt werden. Dies erfordert eine entsprechend aufwendige Ausgangstreiberschaltung.

Es wurde daher bereits ein dezentrales Steuersystem für den Einsatz bei Sicherheitssystemen für Kraftfahrzeuge vorgeschlagen (nicht vorveröffentlichte DE 196 19 117 A1), bei dem die einzelnen peripheren Module mit einer Sende- und Empfangsvorrichtung ausgerüstet sind, die es ermöglicht, die an einem ersten Eingangs/Ausgangs-Anschluß von der Zentraleinheit oder einem vorhergehenden Modul empfangene Information über einen zweiten Eingangs/Ausgangs-Anschluß an das nachfolgende periphere Modul weiterzuleiten.

Soll bei einem derartigen dezentralen Steuersystem die Daten- oder Informationsübertragung von der Zentraleinheit zu den einzelnen peripheren Modulen und umgekehrt mit hohen Übertragungsfrequenzen, z. B. 1 MHz, durchgeführt werden, um im Falle der Verwendung eines derartigen Steuersystems bei einem Sicherheitssystem für Kraftfahrzeuge im Falle eines gefährlichen Unfalls die einzelnen Sicherheitseinrichtungen soweit erforderlich schnell und zum optimalen Zeitpunkt auslösen zu können, so muß auf die Signalform, sowie die Signallaufzeiten der Daten, die sequentiell von Modul zu Modul über EingangsRC-Schutzschaltungen weitergeleitet werden, geachtet werden, um eine fehlerfreie Kommunikation, also einen fehlerfreien Datenaustausch zu gewährleisten. Dabei ist es insbesondere erforderlich, daß die Sende- und Empfangsvorrichtungen der einzelnen Module selbständig die Datenübertragungsrichtung feststellen und sendeseitig die für hohe Übertragungsfrequenzen erforderlichen kurzen Schaltzeiten sicherstellen können.

Davon ausgehend liegt der Erfindung die Aufgabe zugrunde, eine Sende- und Empfangseinrichtung für eine bidirektionale Datenübertragung bereitzustellen, die automatisch die Datenübertragungsrichtung erkennt.

Diese Aufgabe wird durch die Sende- und Empfangsvorrichtung nach Anspruch 1 gelöst.

Erfindungsgemäß ist also zwischen einem ersten und einem zweiten Eingangs/Ausgangs-Anschluß der Sende- und Empfangsvorrichtung für jede Datenübertragungsrichtung eine Übertragungsstrecke mit einem Eingangskreis, einer Sendetorschaltung und einem Ausgangskreis vorgesehen, wobei die Sendetorschaltungen und die Ausgangskreise von eine Sendetor-Steuerschaltung entsprechend der festgestellten Datenübertragungsrichtung freigegeben bzw. gesperrt werden. Die Sendetor-Steuerschaltung ist hierzu mit Datenausgängen der Eingangskreise der Übertragungsstrecken verbunden, so daß sie die Sendetorschaltungen und Ausgangskreise in Abhängigkeit davon steuert, an welchem der Eingangs/Ausgangs-Anschlüsse zu übertragende Daten jeweils zuerst empfangen werden.

Dabei ist insbesondere vorgesehen, daß gleichzeitig mit der Festlegung der Datenübertragungsrichtung die Eingangs- und Ausgangsimpedanzen in geeigneter Weise für den Datenübertragungsbetrieb festgelegt werden, wobei der als Eingang dienende Eingangs/Ausgangs-Anschluß eine hohe Eingangsimpedanz aufweist, während der als Sendeausgang dienende Eingangs/Ausgangs-Anschluß eine relativ niedrige Ausgangsimpedanz besitzt, so daß am Eingang nur eine relativ geringe Verlustleistung auftritt, während am Ausgang hohe Ströme und kurze Schaltzeiten realisiert werden können.

Vorteilhafte Weiterbildungen und Ausgestaltungen der Erfindung sind in den Unteransprüche beschrieben.

Die Erfindung wird im folgenden beispielsweise anhand der Zeichnung näher erläutert. In dieser zeigt:
- Fig. 1: ein schematisches Blockschaltbild eines Steuersystems,
- Fig. 2: ein vereinfachtes schematisches Blockschaltbild eines peripheren Moduls des Steuersystem,
- Fig. 3: ein schematisches Blockschaltbild einer erfindungsgemäßen Sende- und Empfangsvorrichtung, und
- Fig. 4: ein schematisches Blockschaltbild einer Ausgangstreiberschaltung der Zentraleinheit des Steuersystems.

In den verschiedenen Figuren der Zeichnung sind einander entsprechende Bauteile mit gleichen Bezugszeichen versehen.

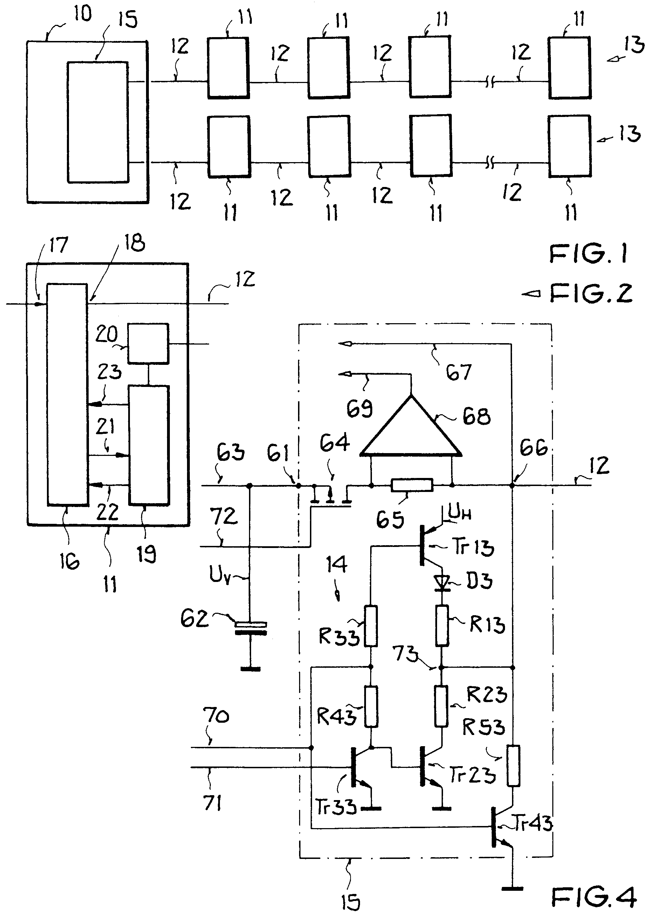

Figur 1 zeigt ein dezentrales Steuersystem mit einer Zentraleinheit 10 und einer Vielzahl von peripheren Modulen 11, die über Busleitungsabschnitte 12, insbesondere Eindrahtleitungen, so miteinander verbunden sind, daß lineare Busstränge 13 gebildet sind. Die einzelnen Module 11 sind also über einen ersten Busleitungsabschnitt 12 mit der Zentraleinheit 10 bzw. dem vorhergehenden Modul 11 und über einen zweiten Busleitungsabschnitt 12 mit einem nachfolgenden Modul 11 verbunden.

Je nach dem Ausbaugrad des dezentralen Steuersystems können unterschiedlich viele Busstränge 13 vorgesehen sein. Außerdem ist möglich, anstelle des dargestellten sternförmigen Bussystems einen ringförmigen Bus aufzubauen. Die Busleitungsabschnitte 12, die zu den am nächsten zur Zentraleinheit 10 liegenden Modulen 11 führen, sind dabei an eine einen Sendetreiber 14 (siehe Fig. 4) aufweisende Schnittstellenschaltung 15 der Zentraleinheit 10 angeschlossen.

Wie Fig. 2 zeigt, umfaßt jedes periphere Modul 11 eine Sende- und Empfangsvorrichtung 16, mit einem ersten und einem zweiten Eingangs/Ausgangs-Anschluß, eine Funktionseinheit 19, sowie einen Ausgangsschaltkreis 20, der beispielsweise bei Verwendung des Steuersystems in einem Sicherheitssystem für Kraftfahrzeuge eine Auslöseeinrichtung einer Sicherheitsvorrichtung, beispielsweise eine Zündpille eines Gasgenerators eines Airbags, ansteuert.

Die Funktionseinheit 19, die insbesondere programmierbar ist, ist über eine Empfangsdatenleitung 21 und eine Sendedatenleitung 22 mit der Sende- und Empfangsvorrichtung 16 verbunden. Um, wie später beschrieben wird, einen Datenübertragungsbetrieb der Sende- und Empfangsvorrichtung 16 freizugeben, ist eine Freigabeleitung 23 vorgesehen.

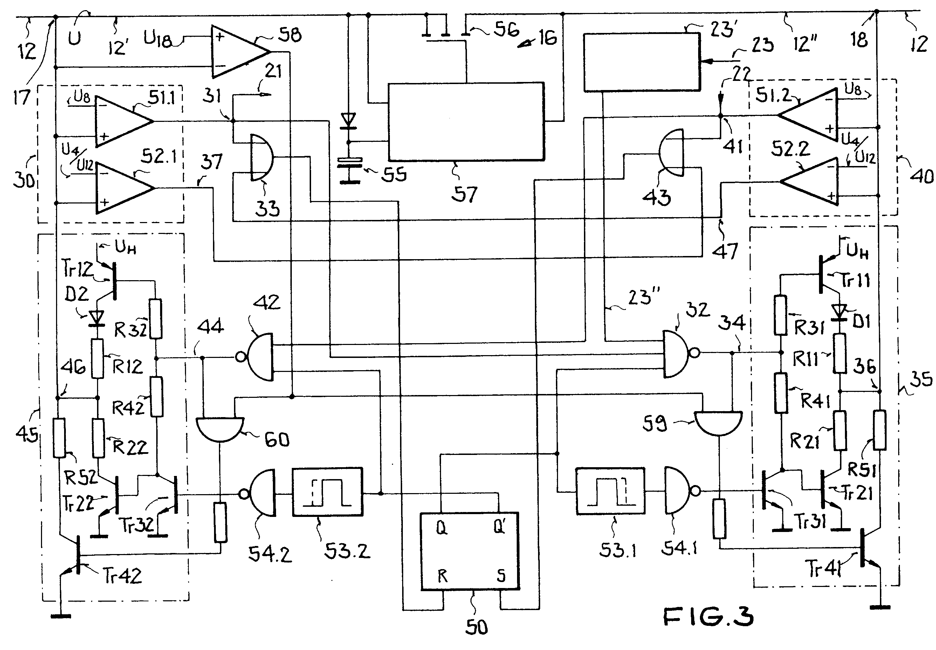

Wie Fig. 3 zeigt, weist die Sende und Empfangsvorrichtung 16 einen ersten Eingangskreis 30 auf, der mit dem ersten Eingangs/Ausgangs-Anschluß 17 verbunden ist, und der einen Datenausgang 31 aufweist. Der Datenausgang 31 ist mit einem Eingang einer Sendetorschaltung 32, der Empfangsdatenleitung 21 und einem Eingang eines Logikgatters 33 verbunden. Die Sendetorschaltung 32, die beispielsweise ein NAND-(NICHT- UND) -Gatter sein kann, ist mit ihrem Ausgang an einen Eingang 34 eines Ausgangskreises 35 angeschlossen. Der Ausgangskreis 35 ist mit seinem Ausgang 36 mit dem zweiten Eingangs/Ausgangs-Anschluß 18 der Sende- und Empfangsvorrichtung 16 verbunden.

In entsprechender Weise ist an den zweiten Eingangs/Ausgangs-Anschluß 18 ein zweiter Eingangskreis 40 angeschlossen, dessen Datenausgang 41 mit einem Eingang einer zweiten Sendetorschaltung 42 verbunden ist. Der Datenausgang 41 ist weiter mit der Sendedatenleitung 22 und einem Eingang eines Logikgatters 43 verbunden. Der Ausgang der Sendetorschaltung 42, die beispielsweise ein NAND-(NICHT-UND)-Gatter ist, ist an einen Eingang 44 eines zweiten Ausgangskreises 45 angeschlossen, dessen Ausgang 46 mit dem ersten Eingans/Ausgangs-Anschluß 17 verbunden ist.

Ein Steuerausgang 37 des ersten Eingangskreises 30 ist mit einem Zweiten Eingang des zweiten Logikgatters 43 verbunden, während ein Steuerausgang 47 des zweiten Eingangskreises 40 mit einem zweiten Eingang des ersten Logikgatters 33 verbunden ist. Der Ausgang des ersten Logikgatters 33, das beispielsweise ein ODER-Gatter ist, ist mit einem Eingang R einer Sendetorschaltung 50 verbunden, während der Ausgang des zweiten Logikgatters 43, das ebenfalls als ODER-Gatter ausgebildet sein kann, an einen Eingang S der Sendetor-Steuerschaltung 50 geführt ist.

Ein Ausgang Q, der vorzugsweise als Flip-Flop ausgebildeten Sendetor-Steuerschaltung 50 ist an einen Eingang des als erste Sendetorschaltung dienenden NAND-Gatters 32 angelegt, während ein Ausgang Q' des als Sendetor-Steuerschaltung dienenden Flip-Flops 50 an einen Eingang des als zweite Sendetorschaltung dienenden NAND-Gatters 42 angeschlossen ist.

Jeder Eingangskreis 30, 40 weist einen ersten Komperator 51.1, 51.2 auf, dessen Ausgang den Datenausgang 31, 41 des Eingangskreises 30, 40 bildet. Der erste Komperator 51.1 bzw. 51.2 des ersten bzw. zweiten Eingangskreises 30 bzw. 40 ist dabei mit dem ersten bzw. zweiten Eingangs/Ausgangs-Anschluß 17 bzw. 18 verbunden, um die über den jeweiligen Busleitungsabschnitt 12 anliegende Spannung U mit einer ersten Bezugsspannung U₈ zu vergleichen, und ein Ausgangssignal mit hohem Pegel zu erzeugen, wenn die Spannung U am Eingangs/Ausgangs-Anschluß 17 bzw. 18 größer ist als die erste Bezugsspannung U₈, während ein Ausgangssignal mit niedrigem Pegel ausgegeben wird, wenn die am nicht invertierenden Eingang anliegende Spannung kleiner als die Bezugsspannung U₈ ist. Die erste Bezugsspannung U₈ ist dabei vorteilhafter Weise so gewählt, daß sie der halben Spannung U_{H} entspricht, die auf dem Busleitungsabschnitt 12 einen logisch 1 Pegel darstellt. Daneben weist jeder Eingangskreis 30, 40 einen zweiten Komperator 52.1, 52.2 auf, dessen Ausgang den Steuerausgang 37 des ersten bzw. zweiten Eingangskreises 30, 40 bildet. Der zweite Komperator 52.1 bzw. 52.2, dessen invertierender Eingang mit dem jeweiligen Eingangs/Ausgangs-Anschluß 17 bzw. 18 verbunden ist, vergleicht die Spannung U am Eingangs/Ausgangs-Anschluß 17 bzw. 18 mit einer zweiten Bezugsspannung U₄, die kleiner ist als die am ersten Komperator 51.1 bzw. 52.1 anliegende Bezugsspannung U₈, wenn die Spannung am Eingangs/Ausgangs-Anschluß 17 bzw. 18 von einem hohen auf einen niedrigen Pegel absinkt. Steigt die Spannung am Eingangs/Ausgangs-Anschluß 17 bzw. 18 von einem niedrigen Pegel auf einen hohen Pegel an, so vergleicht der zweite Komperator 52.1 bzw. 52.2 die Spannung U am Eingangs/Ausgangs-Anschluß 17 bzw. 18 mit einer dritten Bezugsspannung U₁₂, die größer ist als die erste Bezugsspannung U₈.

Der zweite Komperator 52.1 bzw. 52.2 weist somit ein Hystereseverhalten auf, das zur Folge hat, daß sowohl beim Wechsel von einem hohen zu einem niedrigen Spannungspegel als auch beim Wechsel von einem niedrigen zu einem hohen Spannungspegel am Eingangs/Ausgangs-Anschluß 17 bzw. 18 die erste Komperatorschaltung 51.1 bzw. 51.2 den Ausgangspegel vor der zweiten Komperatorschaltung 52.1 bzw. 52.2 umschaltet.

Jeder Ausgangskreis 35, 45 weist beispielsweise eine Reihenschaltung aus einem ersten Transistor Tr11, Tr12, einer Diode D1, D2, einem ersten Widerstand R11, R12, einem zweiten Widerstand R21, R22 und einem zweiten Transistor Tr21, Tr22 auf, die zwischen eine Spannung U_{H}, die einen logisch 1 Pegel darstellt, und Masse (logisch 0 Pegel) geschaltet ist. Die Basisanschlüsse der ersten Transistoren Tr11, Tr12, sind über je einen dritten Widerstand R31, R32 mit dem Eingang 34, 44 des Ausgangskreises 35, 45 verbunden, während die Basisanschlüsse der zweiten Transistoren Tr21, Tr22 über je einen vierten Widerstand R41 bzw. R42 an den Eingang 34, 44 des Ausgangskreises 35, 45 angelegt sind. Die Basisanschlüsse der zweiten Transistoren Tr21, Tr22 sind außerdem jeweils über die Kollektor-Emiter-Strecke eines zugeordneten dritten Transistors Tr31, Tr32 mit Masse verbunden. Um die dritten Transistoren Tr31, Tr32 jeweils in ihren leitenden bzw. nichtleitenden Zustand zu steuern, ist der erste bzw. zweite Ausgang Q bzw. Q' der Sendetor-Steuerschaltung über eine Impulsverlängerungsschaltung 53.1 bzw. 53.2 und einen Inverter 54.1 bzw. 54.2 jeweils mit der Basis des dritten Transistors Tr31 bzw. Tr32 verbunden.

Um während eines Kommunikationsbetriebes und/oder bei Ausfall einer allgemeinen Spannungsversorgung einen Betrieb der erfindungsgemäßen Sende- und Empfangsvorrichtung 16 zumindest für eine gewisse Zeit aufrecht erhalten zu können, ist ein Autarkie-Kondensator 55 vorgesehen, der bei diesem Ausführungsbeispiel mit dem ersten Eingangs/Ausgangs-Anschluß 17 verbunden ist.

Die Eingangs/Ausgangs-Anschlüsse 17, 18 sind außerdem über einen steuerbaren Schalter 56, beispielsweise einem Feldeffekttransistor miteinander verbunden, der während eines Spannungsversorgungsbetriebs zum Aufladen der Autarkie-Kondensatoren 35 leitend ist, und der die Verbindung zwischen dem ersten und dem zweiten Eingangs/Ausgangs-Anschluß 17 bzw. 18 unterbricht, sobald vom Spannungsversorgungsbetrieb auf einen Kommunikationsbetrieb übergegangen wird, sobald also die Spannung auf dem Busleitungsabschnitt 12 unter die Versorgungsspannung U_{V} von beispielsweise 20V sinkt. Der Schalter 56 wird dazu von einem Steuerkreis 57 angesteuert, der die Spannungen auf den Leitungsabschnitten 12' und 12'' mit der Spannung am Autarkie-Kondensator 55 vergleicht.

Ein dritter Komperator 58, der als weitere Leitungsüberwachungsschaltung vorgesehen ist, um während des Spannungsversorgungsbetriebs eine sehr hohe Impedanz an beiden Eingangs/Ausgangs-Anschlüssen 17, 18 sicherzustellen, ist mit seinem invertierenden Eingang an den Eingangs/Ausgangs-Anschluß 17 angeschlossen, während an seinem nicht invertierenden Eingang eine vierte Bezugsspannung U₁₈ anliegt, die kleiner als die Versorgungsspannung U_{V} aber größer als die logisch 1 darstellende Spannung U_{H} ist. Der Ausgang des Komperators 58 ist über ein erstes bzw. zweites UND-Gatter 59 bzw. 60 sowohl an die Basis eines vierten Transistors Tr41 des ersten Ausgangskreises 35 als auch an die Basis eines vierten Transistors Tr42 des zweiten Ausgangskreises 45 angelegt. Der vierte Transistor Tr41 bzw. Tr42 des ersten bzw. zweiten Ausgangskreises 35 bzw. 45 ist mit seinem Emitter mit Masse verbunden, während sein Kollektor über einen Widerstand R51 bzw. R52 mit dem zweiten bzw. dem ersten Eingangs/Ausgangs-Anschluß 18 bzw. 17 verbunden ist. Der zweite Eingang des ersten bzw. zweiten UND-Gatters 59 bzw. 60 ist mit dem Ausgang der ersten bzw. zweiten Sendetorschaltung 32 bzw. 42 verbunden.

Die Schnittstellenschaltung 15 der Zentraleinheit 10 weist, wie Fig. 4 zeigt, einen Versorgungsspannungseingang 61 auf, an den ein Autarkie-Kondensator 62 und eine Versorgungsspannungsleitung 63 angeschlossen ist, die in nicht näher dargestellter Weise mit einer Versorgungsspannungsquelle verbunden ist. Der Versorgungsspannungseingang 63 ist über einen steuerbaren Schalter 64 und einen Stromfühlerwiderstand 65 mit einem Ausgang 66 verbunden, an den ein Busleitungsabschnitt 12 angeschlossen ist. Die am Ausgang 66 anliegende Spannung ist für einen Datenempfang über eine Empfangsleitung 67 an eine nicht dargestellte Spannungs-Informationsauswertungsschaltung der Zentraleinheit 10 angelegt.

Um einen Versorgungsspannungsbetrieb überwachen zu können, um also festzustellen, wann die einzelnen Autarkie-Kondensatoren 55 der angeschlossenen Sende- und Empfangsschaltungen 16 aufgeladen sind, erfaßt ein als Stromfühler dienender Operationsverstärker 68 die am Stromfühlerwiderstand 65 abfallende Spannung und liefert über eine Leitung 69 ein entsprechendes Ausgangssignal an eine Strom-Informationsauswertungsschaltung der Zentraleinheit 10.

Der für den Sendebetrieb vorgesehene Sendetreiber 14 ist in gleicher Weise aufgebaut, wie die Ausgangskreise 35, 45 der erfindungsgemäßen Sende- und Empfangsvorrichtung und weist eine Reihenschaltung aus einem ersten Transistor Tr13, einer Diode D3, einem ersten Widerstand R13, einem zweiten Widerstand R23 und einem zweiten Transistor Tr23 auf, die zwischen eine Spannung U_{H} und Masse geschaltet ist. Die Basis des ersten Transistors Tr13 ist über einen dritten Widerstand R33 mit einem Sendedateneingang 70 verbunden, der über einen vierten Widerstand R43 mit der Basis des zweiten Transistors Tr23 verbunden ist. Außerdem ist die Basis des zweiten Transistors Tr23 über die Kollektor-Emitter-Strecke eines dritten Transistors Tr33 mit Masse verbunden. An die Basis des dritten Transistors Tr33 ist eine vierte Steuerleitung 71 angeschlossen, um den dritten Transistor Tr33 in seinen nichtleitenden Zustand zu steuern, wenn ein Datenübertragungsbetrieb ausgeführt werden soll. Eine weitere Steuerleitung 72 steuert den als Feldeffekttransistor dargestellten Schalter 64, um diesen für einen Spannungsversorgungsbetrieb in seinen leitenden Zustand zu steuern, während er beim Datenübertragungsbetrieb in seinen nichtleitenden Zustand gehalten wird.

Der Verbindungspunkt 73 zwischen dem ersten und dem zweiten Widerstand R13, R23 ist einerseits mit dem Ausgang 66 der Schnittstellenschaltung 15 und andererseits über einen Widerstand R53 sowie die Kollektor-Emitter-Strecke eines vierten Transistors Tr43 mit Masse verbunden. Die Basis des vierten Transistors Tr43 ist dabei mit dem Sendedateneingang 70 verbunden.

Um einen Spannungsversorgungsbetrieb für die an die Zentraleinheit 10 angeschlossenen peripheren Module 11 bzw. die Sende- und Empfangsvorrichtungen 16 auszuführen, wird der Schalter 64 über die Steuerleitung 72 in seinen leitenden Zustand gebracht, so daß die Versorgungsspannung U_{V} am Ausgang 66 der Schnittstellenschaltung 15 anliegt. Gleichzeitig wird über den Sendedateneingang ein Signal mit niedrigem Pegel, beispielsweise 0V, angelegt, so daß der zweite und der dritte Transistor Tr23 und Tr43, die im dargestellten Ausführungsbeispiel als npn-Transistoren ausgebildet sind, nichtleitend werden, so daß der Verbindungspunkt 73 und damit der Ausgang 66 der Schnittstellenschaltung 15 von Masse getrennt ist, während der im dargestellten Beispiel als pnp-Transistor ausgebildete erste Transistor Tr13 leitend geschaltet wird. Wegen der Diode D3 ist dies jedoch für den Spannungsversorgungsbetrieb ohne Bedeutung, da die den logisch 1 Pegel darstellende Spannung U_{H} kleiner als die Versorungsspannung U_{V} ist.

Für den Sendebetrieb während einer Datenübertragung wird der Schalter 64 über die Steuerleitung 72 in seinen nichtleitenden Zustand gebracht, so daß die am Ausgang 66 der Schnittstellenschaltung 15 anliegende Spannung der Spannung am Verbindungspunkt 73 zwischen dem ersten und dem zweiten Widerstand R13 bzw. R23 entspricht. Über die erste Steuerleitung 71 wird auch der dritte Transistor Tr33 in seinem nichtleitenden Zustand gehalten, so daß der zweite Transistor Tr23 über den Sendedateneingang 70 angesteuert werden kann.

Liegt am Sendedateneingang 70 ein Signal mit niedrigem Pegel (logisch 0) an, so wird der erste Transistor Tr13 leitend, während der zweite und der vierte Transistor Tr23 bzw. Tr43 nichtleitend sind, so daß die Spannung U_{H} über die Diode D3 und den Widerstand R13, der einen relativ kleinen Widerstandswert hat, beispielsweise 47 Ω, am Ausgang 66 anliegt. Am Ausgang 66 liegt damit die logisch 1 entsprechende hohe Spannung U_{H} an.

Wird am Sendedateneingang 70 die Spannung hoch (logisch 1) so wird der erste Transistor Tr13 nichtleitend, während der zweite und vierte Transistor Tr23, Tr43 leitend werden, so daß über die Parallelschaltung des zweiten und fünften Widerstands R23, R53, von denen der zweite Widerstand R23 einen niedrigen Widerstandswert von beispielsweise 56 Ω aufweist, schnell auf Masse gezogen, so daß am Ausgang 66 nahezu 0 V entsprechend logisch 0 anliegen.

Für einen Empfangsbetrieb während einer Datenübertragung wird der Schalter 64 weiterhin in seinem nichtleitenden Zustand gehalten, während ein Signal mit hohem Pegel an den Sendedateneingang 70 angelegt wird. Hierdurch wird der erste Transistor Tr13 nichtleitend, während der vierte Transistor Tr43 leitet. Gleichzeitig wird der zweite Transistor Tr23 ebenfalls in seinen nichtleitenden Zustand gebracht, indem über die erste Steuerleitung 71 ein Signal mit hohem Pegel an die Basis des dritten Transistor Tr33 gelegt wird, der somit leitet und die Basis des zweiten Transistors Tr23 auf nahezu 0V zieht. Somit liegt der Ausgang 66 über den fünften Widerstand R53, der einen relativ hohen Widerstandswert von beispielsweise 1 kΩ aufweist, und den leitenden Transistor Tr43 an Masse.

Auf diese Weise wird für den Sendebetrieb eine relativ niedrige Ausgangsimpedanz sichergestellt, die im wesentlichen durch die Reihenschaltung des ersten und des zweiten Widerstands R13, R23 gebildet wird, während beim Empfangsbetrieb der Widerstand R53 eine hohe Eingangsimpedanz für den Empfangsbetrieb bewirkt.

Im folgenden wird die Funktionsweies der erfindungsgemäßen Sende- und Empfangsvorrichtung beschrieben.

Beim Spannungsversorgungsbetrieb, bei dem über die Busleitungsabschnitte 12 die Versorungsspannung U_{V} anliegt, sind die Datenausgänge 31, 41 und Steuerausgänge 37, 47 der ersten und zweiten Eingangskreise 30, 40 auf hohem Pegel, da die Versorgungsspannung U_{V} größer als die erste und dritte Bezugsspannung U₈ bzw. U₁₂ ist. Somit liegt über das ODER-Gatter 33 bzw. das ODER-Gatter 43 am ersten Eingang R und am zweiten Eingang S des Flip-Flops 50 ein hoher Pegel an, wodurch die Ausgänge Q, Q' in ihrem vorhergehenden Zustand gehalten werden.

Da beim Übergang vom Datenübertragungsbetrieb, der mit einem niedrigen Pegel beendet wurde, zum Spannungsversorgungsbetrieb der erste Komperator 51.1 als erster seinen Ausgang auf einen hohen Pegel geschaltet hat, wurde über das ODER-Gatter 33 der erste Eingang R des Flip-Flops 50 auf hohen Pegel gebracht, so daß am Ausgang Q jetzt ein logisch 1 entsprechender hoher Pegel anliegt, während am Ausgang Q' ein logisch 0 entsprechender niedriger Pegel vorliegt. Da die Versorgungsspannung U_{V} größer ist als die vierte Bezugsspannung U₁₈, liefert der Komperator 58 einen logisch 0 entsprechenden niedrigen Ausgangspegel, der über die UND-Gatter 59, 60 bewirkt, daß die vierten Transistoren Tr41 und Tr42 nichtleitend werden. Da an dem als erste Sendetorschaltung dienenden NAND-Gatter 32 sämtliche Eingänge auf einem hohen Pegel liegen, wird ein niedriger Pegel an den Eingang 34 des Ausgangskreises 35 gelegt, der den ersten Transistor Tr11 leitend und den zweiten Transistor Tr21 nichtleitend steuert. Zusätzlich wird der dritte Transistor Tr31 nichtleitend gehalten.

Die Diode D1 sperrt dabei die Verbindung zwischen dem zweiten Eingangs/Ausgangs-Anschluß 18 und der die Spannung U_{H} liefernden Spannungsquelle, da die Versorgungsspannung U_{V} größer als die den logisch 1 Pegel darstellende Spannung U_{H} ist.

Das als zweite Sendetorschaltung dienende NAND-Gatter 42 liefert ein Ausgangssignal mit hohem Pegel, da an einen seiner Eingänge vom zweiten Ausgang Q' des Flip-Flops 50 her ein niedriger Pegel anliegt. Somit wird der erste Transistor Tr12 nichtleitend. Der dritte Transistor Tr32 wird leitend, da an seiner Basis ein Signal mit hohem Pegel anliegt, das vom Inverter 54.2 geliefert wird, dem das Signal mit niedrigem Pegel vom zweiten Ausgang Q' des Flip-Flops 50 zugeführt ist. Somit wird die Basis des zweiten Transistors Tr22 auf 0 V gezogen und der zweite Transistor Tr22 sperrt.

Damit sind die Eingangs/Ausgangs-Anschlüsse 17, 18 von Masse getrennt und es liegt an ihnen praktisch keine Last an, so daß praktische keine Verlustleistung auftritt während der Autarkie-Kondensator 55 aufgeladen wird.

Sobald vom Spannungsversorgungsbetrieb in den Datenübertragungsbetrieb gewechselt wird, sinkt die Spannung auf den Busleitungsabschnitten 12 unter die vierte Bezugsspannung U₁₈, so daß der Komperator 58 ein Ausgangssignal mit hohem Pegel liefert, das an die UND-Gatter 59, 60 angelegt wird. Außerdem wird der Schalter 56 von der Steuerschaltung 57 in seinen nichtleitenden Zustand geschaltet. Beim weiteren Absinken der Spannung am ersten Eingangs/Ausgang-Anschluß 17 schaltet zunächst der erste Komperator 51.1 seinen Ausgang auf einen niedrigen Pegel, so daß das NAND-Gatter 32 ein Ausgangssignal mit hohem Pegel liefert. Damit wird über das UND-Gatter 59 der vierte Transistor Tr41 des ersten Ausgangskreises 35 leitend, so daß der zweite Eingangs/Ausgangs-Anschluß 18 über den fünften Widerstand R51, der einen relativ hohen Widerstandswert von beispielsweise 1 kΩ aufweist, auf Masse (0 V), also auf logisch 0, gezogen.

Sobald an beiden Eingangs/Ausgangs-Anschlüssen 17, 18 eine logisch 0 entsprechende Spannung anliegt, sind die Datenausgänge 31, 41 und Steuerausgänge 37, 47 des ersten und zweiten Eingangskreises 30, 40 auf niedrigem Pegel, so daß an beiden Eingängen R, S des Flip-Flops 50 logisch 0 anliegt. Dementsprechend sind auch die Ausgänge Q, Q' auf niedrigem Pegel, so daß die NAND-Gatter 32, 42 der ersten und zweiten Sendetorschaltung jeweils ein hohes Ausgangssignal liefern und die ersten Transistoren Tr11, Tr12 der beiden Ausgangskreise 35, 45 nichtleitend werden. Die niedrigen Ausgangssignale an den Ausgängen Q, Q' des Flip-Flops 50 führen über die Inverter 54.1, 54.2 dazu, daß die dritten Transistoren Tr31, Tr32 leitend werden, so daß die zweiten Transistoren Tr21, Tr22 der Ausgangskreise 35, 45 sperren.

Da das auf einem hohen Pegel liegende Ausgangssignal des zweiten NAND-Gatters 42 über das UND-Gatter 60 den Transistor Tr42 leitend steuert, liegt nun auch der erste Eingangs/Ausgangs-Anschluß 17 über den fünften Widerstand R52, dessen Widerstand ebenfalls einen relativ hohen Widerstands-wert aufweist, und die leitende Kollektor-Emitter-Strecke des Transistors Tr42 an Masse, so daß auch am ersten Eingangs/Ausgangs-Anschluß 17 eine hohe Eingangsimpedanz für den Kommunikationsbetrieb vorliegt.

Die erfindungsgemäße Sende- und Empfangseinrichtung 16 weist somit an beiden Eingangs/Ausgangs-Anschlüssen 17, 18 die gewünschte hohe Eingangsimpedanz auf.

Sobald die Spannung am ersten Eingangs/Ausgangs-Anschluß 17 von 0 V auf U_{H} ansteigt, schaltet, infolge des nicht unendlich schnellen Spannungsanstiegs zunächst der erste Komperator 51.1 auf einen hohen Pegel, so daß der erste Eingang R des Flip-Flops 50 über das ODER-Gatter 33 auf einen hohen Pegel geschaltet wird. Damit nimmt auch der erste Ausgang Q des Flip-Flops 50 einen hohen Pegel an, so daß die erste Torschaltung 32 freigegeben wird. Sofern von der Sendefreigabeschaltung 23' über die Leitung 23'' ebenfalls ein Signal mit hohem Pegel anliegt, was, wie noch kurz beschrieben wird, nach der ersten Inbetriebnahme des Steuersystems immer der Fall ist.

Da das hohe Ausgangssignal vom ersten Ausgang Q des Flip-Flops 50 über die Impulsverlängerungsschaltung 53.1 und den Inverter 54.1 an die Basis des dritten Transistors Tr31 gelegt ist, liegt an dieser Basis ein Signal mit niedrigem Pegel, so daß der Transistor Tr31 sperrt. Der erste und zweite Transistor Tr11, Tr21 des ersten Ausgangskreises werden somit vom Ausgangssignal des NAND-Gatters 32 gegensinnig angesteuert, so daß ein vom Datenausgang 31 des ersten Eingangskreises 30 geliefertes Datensignal in ein Sendesignal umgesetzt wird, wie dies bereits anhand des in gleicher Weise aufgebauten Sendetreibers 14 der Schnittstellenschaltung 15 der Zentraleinheit 10 beschrieben wurde.

Da am zweiten Ausgang Q' des Flip-Flops 50 das niedrige Ausgangssignal unabhängig vom Eingangssignal am zweiten Eingang S aufrecht erhalten wird, bleibt der zweite Ausgangsschaltkreis 45 in dem beschriebenen Zustand, so daß die gewünschte hohe Eingangsimpedanz am ersten Eingangs/Ausgangs-Anschluß 17 aufrecht erhalten wird. Die erste Übertragungsstrecke aus Eingangskreis 30, Sendetorschaltung 32 und Ausgangskreis 35 ist somit freigegeben, während die zweite Übertragungsstrecke aus Eingangskreis 40, Sendetorschaltung 42 und Ausgangskreis 45 blockiert ist.

Das am ersten Eingangs/Ausgangs-Anschluß 17 empfangene Datensignal wird somit über den ersten Eingangskreis 30, die erste Sendetorschaltung 32 und den Ausgangskreis 35 an den zweiten Eingangs/Ausgangs-Anschluß 18 angelegt, so daß es über den daran anschließenden Busleitungsabschnitt 12 zum nächsten Modul weiter gesendet wird. Gleichzeitig wird das am Datenausgang 31 des ersten Eingangskreises 30 anstehende Datensignal über die Empfangsdatenleitung 21 der Funktionseinheit 19 des Moduls 11 zugeführt.

Wird eine Datenübertragung in umgekehrter Richtung gewünscht, erscheint also ein Datensignal mit hohem Pegel zuerst am zweiten Eingangs/Ausgangs-Anschluß 18, so schaltet als erstes der erster Komperator 51.2 des ersten Eingangskreises 40 auf ein hohes Ausgangssignal, das an den zweiten Eingang S des Flip-Flops 50 gelegt wird, so daß der zweite Ausgang Q' einen hohen Pegel annimmt, der die zweite Sendetorschaltung 42 freigibt. Der Datenübertragungsbetrieb wird dann über die zweite Übertragungsstrecke in der gleichen Weise, wie für die erste Übertragungsstrecke beschrieben, ausgeführt.

Sollen vom Modul 11 Daten an die Zentraleinheit zurückgesendet werden, was beispielsweise während eines Systemüberwachungszyklus erforderlich ist, so werden die zu sendenden Daten über die Sendedatenleitung 22 an den Datenausgang 41 des zweiten Eingangskreises 40 angelegt, so daß ein entsprechendes Datensignal mit hohem Pegel über das ODER-Gatter 43 an den zweiten Eingang des Flip-Flops 50 und direkt an die zweite Sendetorschaltung 42 angelegt wird. Das dem Datenausgang 41 des zweiten Eingangskreises 40 zugeführte Sendesignal bewirkt also die Freigabe der zweiten Übertragungsstrecke in entsprechender Weise wie ein am zweiten Eingangs/Ausgangs-Anschluß 18 auftretender, logisch 1 entsprechender hoher Pegel vom benachbarten Modul 11. Der Sendebetrieb erfolgt dann wie oben beschrieben.

Um sicherzustellen, daß bei einer ersten Inbetriebnahme des Steuersystems die einzelnen Module 11 von der Zentraleinheit zuverlässig programmiert werden können, also das den einzelnen Modulen 11 eine ihrer Funktion entsprechende Adresse sowie weitere für den Betrieb erforderlichen Daten übermittelt werden können, ist es erforderlich, daß die Sende- und Empfangseinrichtungen der noch unprogrammierten, insbesondere noch unadressierten Module 11 empfangene Daten nicht automatisch weiterleiten. Dies ist erforderlich, damit ein nicht angesprochenes Modul 11 sich nicht fälschlicher Weise angesprochen fühlen kann.

Um hierbei einen Sendebetrieb zu verhindern, ist die programmierbare Freigabeschaltung 23' vorgesehen, die über die Freigabeleitung 23'' zunächst ein die erste Sendetorschaltung 32 sperrendes Ausgangssignal mit niedrigem Pegel ausgibt. Infolgedessen ist zwar das Senden von Daten über den ersten Ausgangskreis 35 nicht möglich, ein Datenempfang über den ersten Eingangs/Ausgangs-Anschluß 17, sowie ein Rücksenden von Daten über den zweiten Ausgangskreis 45 kann ohne weiteres ausgeführt werden.

Sobald das Modul 11 bzw. dessen Funktionseinheit 19 programmiert ist, gibt diese über die Freigabeleitung 23 ein Freigabesignal an die programmierbare Freigabeschaltung 23', die daraufhin ein Ausgangssignal mit hohem Pegel über die Freigabeleitung 23'' an die erste Sendetorschaltung 32 liefert. Somit ist beim folgenden Betrieb der erfindungsgemäßen Sende- und Empfangsvorrichtung 16 eine Steuerung der Sendetorschaltung 32 allein mit dem vom ersten Ausgang Q des Flip-Flops 50 zugeführten Signals möglich.

Die erfindungsgemäße Sende- und Empfangseinrichtung erkennt somit während eines Datenübertragungsbetriebes automatisch die Datenübertragungsrichtung und gibt die entsprechende Übertragungsstrecke frei, wobei der als Sendeausgang benutzte Eingangs/Ausgangs-Anschluß 17, 18 eine niedrige Impedanz aufweist, während der als Empfangseingang genutzte Eingangs/Ausgangs-Anschluß 18, 17 eine relativ hohe Impedanz besitzt.

Um nach Abschluß einer Datenübertragung während eines Datenübertragungsbetriebs sicherzustellen, daß der Sendeausgang möglichst frühzeitig wieder eine hochohmige Impedanz einnimmt, wird der als Sendeausgang genutzte Eingangs/Ausgangs-Anschluß 17 bzw. 18 mit dem zweiten Komperator 52.1 bzw. 52.2 des Eingangskreises 30 bzw. 40 auf seinen Pegel überwacht. Sobald der logisch 0 entsprechende niedrige Pegel kleiner ist als die zweite an der zweiten Komperatorschaltung 52.1 anliegende Bezugsspannung U₄, wird der entsprechende Eingang R, S des Flip-Flops 50 auf einen logisch 0 entsprechenden Pegel gezogen, so daß über die Impulsverlängerungsschaltung 53.1 bzw. 53.2 und den Inverter 54.1 bzw. 54.2 der entsprechende Ausgangskreis 35 bzw. 45 so gesteuert wird, daß er eine hohe Eingangsimpedanz bereitstellt. Die Impulsverlängerungsschaltungen 53.1, 53.2 sind dabei so ausgebildet, daß die Zeit, um die das anliegende Signal mit hohem Pegel verlängert wird, nicht länger ist, als die maximale Totzeit. Auf diese Weise wird erreicht, daß die logisch 0 entsprechenden Ausgangssignale in der Umschaltphase auf den logisch 0 entsprechenden niedrigen Pegel keine Störspitzen enthalten.

Um eine symmetrische Signalform der über die Ausgangskreise 35, 45 zu sendenden Daten zu erreichen, werden die die Komperatorschwellen festlegenden Bezugsspannungen, sowie die Widerstandswerte der in den Ausgangskreisen 35, 35 verwendeten Widerstände entsprechend eingestellt.

Die erfindungsgemäße Sende- und Empfangseinrichtung 16 läßt sich also vorteilhafter Weise zum Aufbau eines Datenübertragungsbusses für ein Steuersystem nutzen, bei dem die Daten jeweils nur bis zum nächsten Modul 11 gesendet werden müssen, da sie dort erneut verstärkt werden. Insbesondere kann die erfindungsgemäße Sende- und Empfangsvorrichtung 16 mit frei wählbaren Datenübertragungsgeschwindigkeiten betrieben werden, wobei insbesondere auch sehr hohe Übertragungsfrequenzen möglich sind.

Besonders vorteilhaft ist es, daß im Versorgungsspannungsbetrieb die Leitungsimpedanzen an den Eingangs/Ausgangs-Anschlüssen 17, 18 wie beschreiben abgetrennt sind, so daß in dieser Betriebsart nur eine geringe Verlustleistung verursacht wird.

In besonders vorteilhafter Weise lassen sich externe Widerstände für die Ausgangskreise 35, 45 verwenden, so daß eine Übertragungsverzögerungszeit unabhängig von den Fertigungstoleranzen einer anwenderspezifischen integrierten Schaltung zur Realisierung der erfindungsgemäßen Sende- und Empfangseinrichtung 16 klein gehalten werden kann. Außerdem wird die Übertragungsverzögerungszeit hierdurch unabhängig von Temperatureinflüssen.

## Patentansprüche

1. Sende- und Empfangsvorrichtung, insbesondere für periphere Module (11) eines Steuersystems mit einer die Module (11) steuernden Zentraleinheit, mit
- einem ersten mit einem ersten Eingangs/Ausgangs-Anschluß (17) verbundenen Eingangskreis (30), der einen Datenausgang (31) aufweist, der über eine erste Sendetorschaltung (32) mit einem Eingang (34) eines ersten mit einem zweiten Eingangs/Ausgangs-Anschluß (18) verbunden Ausgangskreises (35) verbunden ist,
- einem zweiten mit dem zweiten Eingangs/Ausgangs-Anschluß (18) verbundenen Eingangskreis (40), der einen Datenausgang (41) aufweist, der über eine zweite Sendetorschaltung (42) mit einem Eingang (44) eines zweiten mit dem ersten Eingangs/Ausgangs-Anschluß (17) verbundenen Ausgangskreises (45) verbunden ist, und
- einer Sendetor-Steuerschaltung (50), die mit den Datenausgängen (31, 41) des ersten und des zweiten Eingangskreises (30, 40) verbunden ist, um die jeweilige Datenübertragungsrichtung zu erkennen, und die entsprechend der jeweiligen Datenübertragungsrichtung die erste bzw. zweite Sendetorschaltung (32, 42) sowie den ersten bzw. zweiten Ausgangskreis (35, 45) freigibt und den zweiten bzw. ersten Ausgangskreis (45, 35) sperrt.

2. Steuersystem nach Anspruch 1, dadurch **gekennzeichnet,** daß bei gesperrtem Ausgangskreis (35, 45) der entsprechende Eingangs/Ausgangs-Anschluß (18, 17) eine relativ hohe Eingangsimpedanz aufweist.

3. Steuersystem nach Anspruch 1 oder 2, dadurch **gekennzeichnet,** daß bei für den Sendebetrieb freigegebenen Ausgangskreis (35, 45) der entsprechende Eingangs/Ausgangs-Anschluß (18, 17) eine relativ niedrige Ausgangsimpedanz aufweist.

4. Steuersystem nach Anspruch 1, 2 oder 3, dadurch **gekennzeichnet,** daß der Datenausgang (31, 41) des ersten bzw. zweiten Eingangskreises (30, 40) über ein erstes bzw. zweites Logikgatter (33, 43), vorzugsweise ein erstes bzw. zweites ODER-Gatter, an die Sendetor-Steuerschaltung (50) angelegt ist, wobei an einen zweiten Eingang des ersten bzw. zweiten Logikgatters (33, 43) ein Steuerausgang (47, 37) des zweiten bzw. ersten Eingangskreises (40 bzw. 30) angelegt ist, um nach Abschluß einer Datenübertragung die Leitungsimpedanz des als Sendeausgang genutzten Eingangs/Ausgangs-Anschlusses (17, 18) hochohmig zu machen.

5. Steuersystem nach Anspruch 4, dadurch **gekennzeichnet,** daß jeder Eingangskreis (30, 40) einen ersten Komperator (51.1, 51.2), der bei einem Datenempfangsbetrieb ein Datensignal an den Datenausgang (31, 41) des Eingangskreises (30, 40) überträgt und einen zweiten Komperator (52.1, 52.2) umfaßt, der ein Steuersignal an einen Steuerausgang (37, 47) liefert.

6. Steuersystem nach Anspruch 5, dadurch **gekennzeichnet,** daß der zweite Komperator (52.1, 52.2) ein Hystereseverhalten aufweist, so daß sowohl beim Übergang der am entsprechenden Eingangs/Ausgangs-Anschluß (17, 18) anliegenden Spannung von einem hohen Pegel (U_{V}, U_{H}) auf einen niedrigen (U_{L}) als auch bei einem Übergang der Spannung von einem niedrigen Pegel (U_{L}) auf einen hohen Pegel (U_{V}, U_{H}) der erste Komperator (51.1, 51.2) zuerst seinen Ausgangszustand ändert.

7. Steuersystem nach einem der Ansprüche 1 bis 6, dadurch **gekennzeichnet,** daß als Sendetor-Steuerschaltung ein Flip-Flop (50) vorgesehen ist.

8. Steuersystem nach einem der Ansprüche 1 bis 7, dadurch **gekennzeichnet,** daß ein erstes bzw. zweites Steuersignal der Sendetor-Steuerschaltung (50) zum Freigeben oder Sperren der ersten bzw. zweiten Sendetorschaltung (32, 42) über eine Impulsverlängerungsschaltung (53.1, 53.2) an den ersten bzw. zweiten Ausgangskreis (35, 45) angelegt ist, um diesen freizugeben oder zu sperren.

9. Steuersystem nach einem der vorhergehenden Ansprüche, dadurch **gekennzeichnet,** daß eine Leitungsüberwachungsschaltung (58) zum Erkennen eines Kommunikations- und eines Spannungsversorgungsbetriebs vorgesehen ist, die beim Spannungsversorgungsbetrieb die Leitungsimpedanzen der Eingangs/Ausgangs-Anschlüsse (17, 18) auf einen relativ sehr hohen Wert schaltet, die vorzugsweise die Eingangs/Ausgangs-Anschlüsse (17, 18) von Masse trennt.

10. Steuersystem nach einem der vorhergehenden Ansprüche, dadurch **gekennzeichnet,** daß der erste und der zweite Eingangs/Ausgangs-Anschluß (17, 18) über einen steuerbaren Schalter (56) miteinander verbunden sind, der nur während eines Spannungsversorgungsbetriebs leitet.
